# EUROPEAN PATENT APPLICATION

(11) **EP 4 324 669 A1**
(43) Date of publication of application: **21.02.2024**
(21) Application number: 22787301.5
(22) Date of filing: 10.03.2022
(51) Int. Cl.: B60J 5/10

(54) **TAILGATE EMERGENCY OPENING COVER AND VEHICLE**

(30) Priority: 15.04.2021 CN 202120764879 U
(71) Applicant: Beijing CHJ Information Technology Co., Ltd., Beijing 101399 (CN)
(72) Inventor: HUANG, Quan, Beijing 101399 (CN); WANG, Hui, Beijing 101399 (CN)
(74) Representative: Maiwald GmbH
(86) International application number: PCT/CN2022/080235
(87) International publication number: WO 2022/218071

(57) **Abstract**

A tailgate emergency opening cover and a vehicle. The tailgate emergency opening cover comprises a cover body (11), configured to match an emergency opening (13) on a tailgate trim panel (12); connecting mechanisms (10), provided on the cover body (11), the connecting mechanisms (10) being configured to fix a first side of the cover body (11) and the tailgate trim panel (12); and a knob engagement mechanism, rotatably provided on the cover body (11). When the knob engagement mechanism is located at a first position, a second side of the cover body (11) and the tailgate trim panel are locked; when the knob engagement mechanism is located at a second position, the second side of the cover body (11) and the tailgate trim panel are unlocked, and the cover body (11) can be moved away from the emergency opening (13), so that the emergency opening (13) is opened.

## Description

### CROSS-REFERENCE TO RELATED APPLICATIONS

This application is based on and claims the priority to Chinese Patent Application No.202120764879.2, filed on April 15, 2021, the contents of which are hereby incorporated herein by reference in their entireties for all purposes.

### FIELD

The present disclosure relates to the field of automobile manufacturing, and in particular to a tailgate emergency opening cover and a vehicle.

### BACKGROUND

An opening structure of existing tailgate emergency opening covers is to open or close the emergency opening covers by pressing an open button with a single finger. Usually, an opening mechanism needs to be pressed by a single finger and a boundary of the opening mechanism is protruded, which leads to poor finger comfort and poor man-machine relationship. In addition, the pressing mechanism realizes engagement and fastening with a tailgate trim panel through resilience of a " 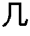 "-shaped structure. After this structure is opened for many times, the elasticity is reduced, which will cause the risk of poor matching or even separation of the emergency opening cover and the tailgate trim panel.

### SUMMARY

The present disclosure provides a tailgate emergency opening cover and a vehicle. The emergency opening can be opened by directly rotating a knob engagement mechanism with a hand without the aid of an auxiliary tool, therefore opening operation is fast and convenient. At the same time, the tailgate emergency opening cover will not cause a risk of poor matching or even separation of the cover body and the tailgate trim panel during an opening process, so the man-machine operation is more reasonable, the use stability is high and the service life is long, and the connection is still firm after repeated use.

According to specific embodiments of the present disclosure, in a first aspect, the present disclosure provides a tailgate emergency opening cover, including a cover body configured to match an emergency opening on a tailgate trim panel; a connecting mechanism arranged on the cover body, and configured to fix a first side of the cover body with a tailgate trim panel; and a knob engagement mechanism rotatably arranged on the cover body. When the knob engagement mechanism is in the first position, a second side of the cover body is locked with the tailgate trim panel, and when the knob engagement mechanism is in a second position, the second side of the cover body is unlocked from the tailgate trim panel, and the cover body can move away from the emergency opening to open the emergency opening.

In some embodiments, the knob engagement mechanism includes a knob and a cantilever, the knob is connected with the cantilever, and the knob is rotated to drive the cantilever to rotate synchronously. When the knob engagement mechanism is in the first position, the cantilever contacts the tailgate trim panel to lock the cover body with the tailgate trim panel. When the knob engagement mechanism is in the second position, the cantilever is separated from the tailgate trim panel.

In some embodiments, the cover body has a mounting part, the mounting part defines a recessed part on a side of the cover body and correspondingly forms a boss on the other side of the cover body, the boss is provided with a mounting hole, and the boss and the cantilever are located at a same side of the cover body. The recessed part is communicated with the mounting hole, and a diameter of the recessed part is larger than a diameter of the mounting hole.

In some embodiments, the knob includes an operating part and a rotating sleeve, an end of the rotating sleeve is connected with the operating part, the operating part is rotatably arranged in the recessed part, the rotating sleeve passes through the mounting hole, and the cantilever is connected with the rotating sleeve.

In some embodiments, an outer circumferential surface of the rotating sleeve is provided with guide blocks, and the guide blocks are fixedly connected with the rotating sleeve and are arranged at intervals in a circumferential direction of the rotating sleeve. The guide block includes a guide surface and an abutment surface, the guide surface is configured to guide insertion of the rotating sleeve into the mounting hole, and the abutment surface is in contact with an end surface of the boss facing away from the recessed part. The guide surface is an inclined surface, the guide surface is adjacent to the abutment surface, and a distance from an axis of the rotating sleeve to the guide surface gradually increases along the axis towards an end close to the abutment surface.

In some embodiments, the outer circumferential surface of the rotating sleeve is provided with a limiting rib, the limiting rib is fixedly connected with the rotating sleeve, the limiting rib is rotatably fitted with a hole wall of the mounting hole, and the limiting rib and the guide block are arranged alternately in the circumferential direction of the mounting hole.

In some embodiments, a side of the limiting rib far from the rotating sleeve is provided with a protrusion, and an outer contour of a cross section of the protrusion is a circular arc surface.

In some embodiments, the hole wall of the mounting hole is provided with at least two recessed limiting grooves, and the at least two limiting grooves are arranged at intervals along a circumference of the mounting hole. When the knob is rotated, the protrusion rotates along the hole wall of the mounting hole, and when the knob engagement mechanism is located in the first position or the second position, the protrusion is engaged in one of the limiting grooves.

In some embodiments, the cover body is provided with a first limiting guide and a second limiting guide, the first limiting guide is located on the tailgate trim panel, and the second limiting guide is located in a middle part of the cover body. When the knob engagement mechanism is in the first position, the cantilever abuts against the first limiting guide; and when the knob engagement mechanism is located in the second position, the cantilever abuts against the second limiting guide.

According to specific embodiments of the present disclosure, in a second aspect, the present disclosure provides a vehicle, which includes a tailgate emergency opening cover of the first aspect.

### BRIEF DESCRIPTION OF THE DRAWINGS

In order to explain specific embodiments of the present utility model or the technical solution in the related art more clearly, the drawings needed in the description of specific embodiments or the related art will be briefly introduced below. Obviously, the drawings in the following description are some embodiments of the present utility model. For ordinary skilled persons in the art, other drawings can be obtained according to these drawings without inventive work.
Fig. 1 is a front view of a tailgate emergency opening cover provided by an embodiment of the present disclosure.
Fig. 2 is a rear view of the tailgate emergency opening cover shown in Fig. 1.
Fig. 3 is a sectional view taken along the line A-A shown in Fig. 1.
Fig. 4 is a sectional view taken along the line B-B shown in Fig. 2.
Fig. 5 is a schematic structural view of a cover body.
Fig. 6 is a structural schematic diagram of a tailgate trim panel.
Fig. 7 is a schematic diagram of a design structure of a knob engagement mechanism.
Fig. 8 is a top view of the tailgate emergency opening cover shown in Fig. 2.

### Description of reference numeral

10- connecting mechanism; 11- cover body; 12- tailgate trim panel; 13- emergency opening; 14- knob; 15- cantilever; 16- recessed part; 17- mounting part; 18- mounting hole; 19- operating part; 20- rotating sleeve; 21- guide block; 22- limiting rib; 23- protrusion; 24- limiting groove; 25-first limiting guide; 26- second limiting guide; 30- mounting opening; 31- flange; 33-identification part; 211- guide surface; 212- abutment surface.

### DETAILED DESCRIPTION

Unless otherwise defined, technical terms or scientific terms used in this disclosure shall have the ordinary meanings as understood by people with ordinary skills in the field to which this disclosure belongs. The terms "first", "second" and the like used in this disclosure do not indicate any order, quantity or importance, but are only used to distinguish different components. Similar words such as "including" or "comprising" mean that the elements or objects appearing before the word cover the elements or objects listed after the word and their equivalents, without excluding other elements or objects.

In order to keep the following description of embodiments of the present disclosure clear and concise, detailed descriptions of known functions and known components are omitted in the present disclosure.

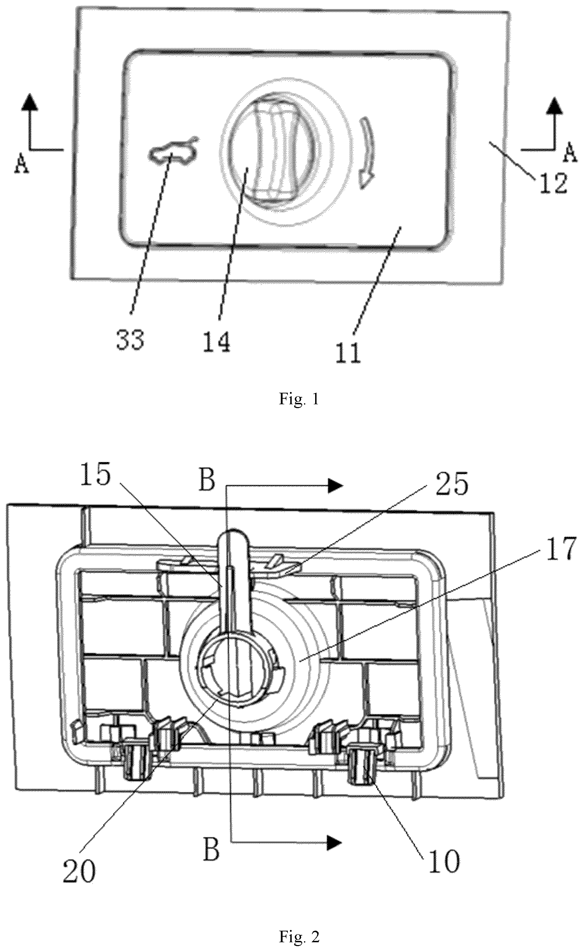

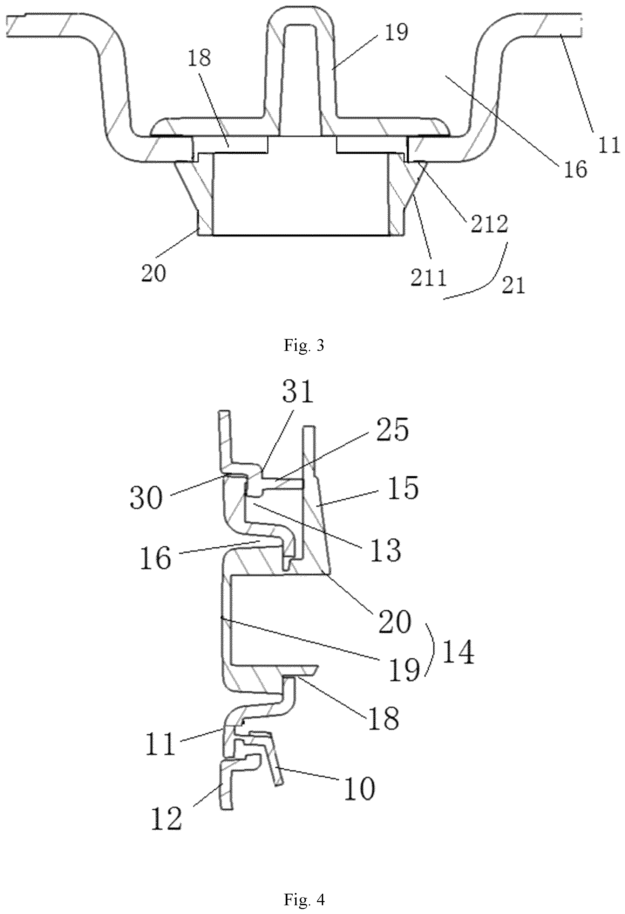

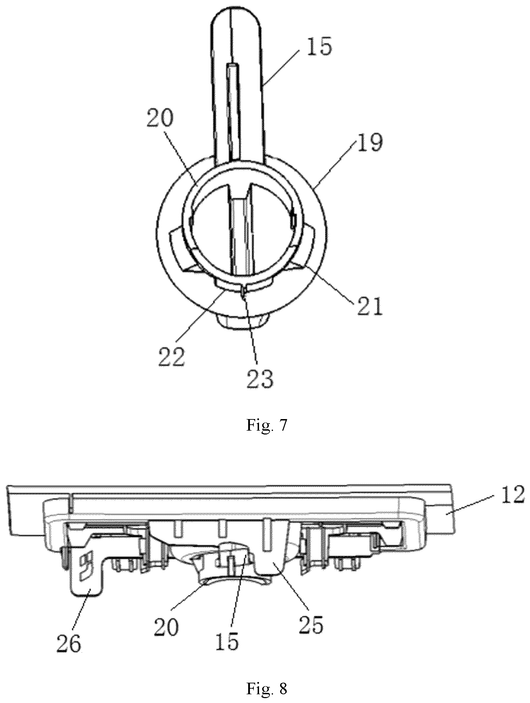

According to a specific embodiment of the present disclosure, in a first aspect, the present disclosure provides a tailgate emergency opening cover, as shown in Figs. 1-8, including a cover body 11 configured to match an emergency opening 13 on a tailgate trim panel 12; a connecting mechanism 10 arranged on the cover body 11 and configured to fix a first side of the cover body 11 with the tailgate trim panel 12; and a knob engagement mechanism rotatably arranged on the cover body 11. When the knob engagement mechanism is in a first position, a second side of the cover body 11 is locked with the tailgate trim panel 12. When the knob engagement mechanism is in a second position, the second side of the cover body 11 is unlocked from the tailgate trim panel 12, and the cover body 11 can move away from the emergency opening 13 to open the emergency opening 13. A recessed surface can be defined on the tailgate trim panel 12 towards an outside of a vehicle, and the recessed surface can be configured as a mounting opening 30. A size of the mounting opening 30 can be set to be slightly larger than the emergency opening 13, a flange 31 is between the mounting opening 30 and the emergency opening 13, and the cover body 11 matches the mounting opening 30. The connecting mechanism 10 can be a hinge or hook structure, and the cover body 11 can be flipped relative to the tailgate trim panel 12 through the connecting mechanism 10. The first side and the second side of the cover body 11 refer to two opposite side edges of the cover body 11. When the emergency opening 13 needs to be opened, the knob engagement mechanism is rotated to be in the second position, the second side of the cover body 11 is unlocked from the tailgate trim panel 12, and the cover body 11 can be flipped relative to the tailgate trim panel 12 toward an inside of the vehicle. When the emergency opening 13 needs to be closed, the knob engagement mechanism is rotated to be in the first position, and the second side of the cover body 11 is locked with the tailgate trim panel 12. At this time, the cover body 11 blocks the emergency opening 13, the cover body 11 is flipped towards the outside of the vehicle and embedded in the mounting opening 30, and the flange 31 has a blocking effect on the cover body 11. The emergency port 13 can be opened by directly rotating the knob engagement mechanism with a hand without the aid of an auxiliary tool, and the opening operation is fast and convenient. At the same time, the tailgate emergency opening cover will not cause the risk of poor matching or even separation between the cover body and the tailgate trim panel during the opening process, so the man-machine operation is more reasonable, the use stability is high and the service life is long, and the connection is still firm after repeated use.

In some embodiments, the knob engagement mechanism includes a knob 14 and a cantilever 15. The knob 14 is connected with the cantilever 15, and the knob 14 is rotated to drive the cantilever 15 to rotate synchronously. When the knob engagement mechanism is in the first position, the cantilever 15 contacts the tailgate trim panel 12 to lock the cover body 11 and the tailgate trim panel 12. When the knob engagement mechanism is in the second position, the cantilever 15 is separated from the tailgate trim panel 12. The knob 14 can be arranged on a side of the cover body 11 facing the inside of the vehicle, the cantilever 15 can be oppositely arranged on the other side of the cover body 11, and the knob 14 is rotated to drive the cantilever 15 to rotate synchronously. When the knob engagement mechanism is in the first position, the cantilever 15 is overlapped with the tailgate trim panel 12, locking the second side of the cover body 11 with the tailgate trim panel 12. At this time, the cover body 11 blocks the emergency opening 13, and the cover body 11 cannot be flipped and opened toward the inside of the vehicle. When the knob engagement mechanism is in the second position, the cantilever 15 is separated from the tailgate trim panel 12, and the second side of the cover body 11 is unlocked from the tailgate trim panel 12, so that the cover body 11 can flip towards the inside of the vehicle and the emergency door 13 is opened.

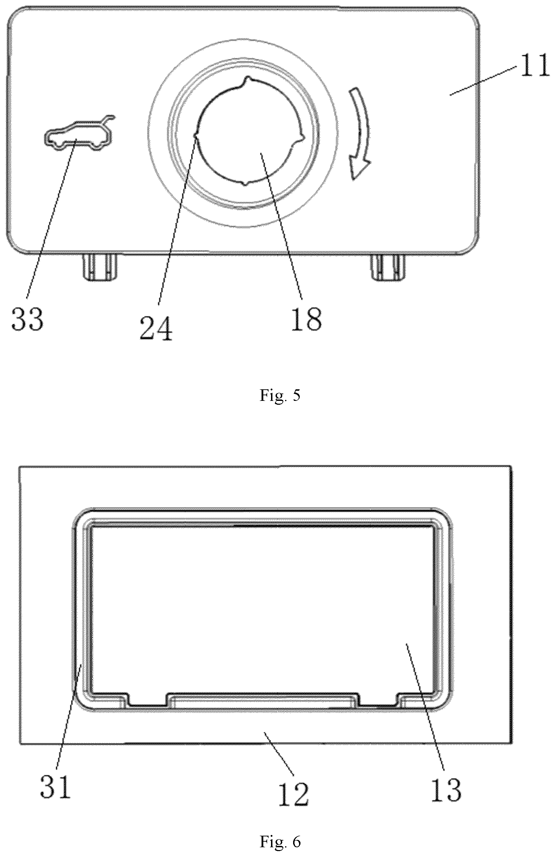

Arrows in Figs. 1 and 5 indicate an operating direction of the knob 14. Optionally, a side surface of the cover body 11 facing the inside of the vehicle is also provided with an identification part 33.

In some embodiments, the cover body 11 has a mounting part 17, the mounting part 17 defines a recessed part 16 on a side of the cover body 11 and correspondingly forms a boss on the other side of the cover body 11, the boss is provided with a mounting hole 18, and the boss and the cantilever 15 are located on the same side of the cover body 11. The recessed part 16 communicates with the mounting hole 18, and a diameter of the recessed part 16 is larger than a diameter of the mounting hole 18. The mounting part 17 can be formed by stamping the cover body 11. Alternatively, a column can be fixedly arranged on a side of the cover body 11, and then the recessed part 16 and the mounting hole 18 can be formed by processing.

The knob 14 includes an operating part 19 and a rotating sleeve 20, an end of the rotating sleeve 20 is connected with the operating part 19, the operating part 19 is rotatably arranged in the recessed part 16, the rotating sleeve 20 passes through the mounting hole 18, the other end of the rotating sleeve 20 far away from the operating part 19 is exposed from the mounting part 17, the cantilever 15 is connected with an outer circumferential surface of the rotating sleeve 20, and the cantilever 15 and the operating part 19 are located at the two sides of the cover body 11, respectively. The cantilever 15 can be inserted into the rotating sleeve 20 and fixed by gluing, or the cantilever 15 can also be injection molded with the knob 14 into one piece. In order to facilitate the installation, the circumferential surface of the rotating sleeve 20 at an end close to the operating part 19, at a side connected with the cantilever 15 and its opposite side can be kept, and the remaining part of the circumferential surface can be cut off, so that the cantilever 15 can also obliquely pass through the mounting hole 18 after the cantilever 15 is integrated with the knob 14.

In some embodiments, the outer circumferential surface of the rotating sleeve 20 is provided with guide blocks 21, and the guide blocks 21 are fixedly connected with the rotating sleeve 20 and are arranged at intervals in the circumferential direction of the rotating sleeve 20. The guide block 21 includes a guide surface 211 and an abutment surface 212, the guide surface 211 is configured to guide the insertion of the rotating sleeve 20 into the mounting hole 18, and the abutment surface 212 is in contact with an end surface of the boss facing away from the recessed part 16. The guide surface 211 is an inclined surface, the guide surface 211 is adjacent to the abutment surface 212, and a distance from an axis of the rotating sleeve 20 to the guide surface 211 gradually increases along the axis towards an end close to the abutment surface 212. There may be two guide blocks 21, which are oppositely arranged on the rotating sleeve 20. The cross section of the guide surface 211 may be gradually increased along the axis of the rotating sleeve 20, and the abutment surface 212 is the largest end surface and faces the operating part 19. The boss is clamped between the operating part 19 and the abutment surface 212 to axially limit the knob engagement mechanism, so that when the knob 14 is rotated, it will not fall off. When the rotating sleeve 20 is inserted into the mounting hole 18, the guide block 21 is squeezed and deformed under the guidance of the guide surface 211. When the guide block 21 passes through the mounting hole 18, the guide block 21 recoveries under the action of elastic force, and at this time, the abutment surface 212 abuts on the boss.

In some embodiments, the outer circumferential surface of the rotating sleeve 20 is provided with a limiting rib 22, and the limiting rib 22 is fixedly connected with the rotating sleeve 20. The limiting rib 22 is rotatably fitted with a hole wall of the mounting hole 18, and the limiting rib 22 and the guide blocks 21 are arranged alternately in the circumferential direction of the mounting hole 18. Two limiting ribs 22 can also be provided, one of which is in the same direction as the cantilever 15 and the other is opposite to the cantilever 15. When the rotating sleeve 20 rotates, the limiting rib 22 has a guiding effect, so that the rotating sleeve 20 moves circumferentially along the mounting hole 18.

A side of the limiting rib 22 far from the rotating sleeve 20 is provided with a protrusion 23, and an outer contour of a cross section of the protrusion 23 is a circular arc surface. The protrusion 23 can be arranged in a middle part of the limiting rib 22, and the outer contour of the cross section of the protrusion 23 is as a circular arc surface. When rotating, the protrusion 23 is squeezed and easily deformed, and the knob 14 can be operated with less force, so that the protrusion 23 can slide out of the limiting groove 24. The protrusion 23 may be provided on only one of the limiting ribs 22.

The hole wall of the mounting hole 18 is provided with at least two recessed limiting grooves 24, and the at least two limiting grooves 24 are arranged at intervals along a circumference of the mounting hole 18. The protrusion 23 is fitted with the limiting groove 24. When the knob 14 is rotated, the protrusion 23 slides along the hole wall of the mounting hole 18, and when the knob engagement mechanism is in the first position or the second position, the protrusion 23 is engaged in one of the limiting grooves 24. In some embodiments, four limiting grooves 24 can be provided, and the limiting grooves 24 are evenly spaced along the circumference of the mounting hole 18, so that every time the knob 14 rotates by 90 degrees, the protrusion 23 can slide into the next limiting groove 24 and stop, so that the cantilever 15 can lock or unlock the cover body 11.

In some embodiments, the cover body 11 is provided with a first limiting guide 25 and a second limiting guide 26. The first limiting guide 25 is located on the tailgate trim panel 12 and the second limiting guide 26 is located in the middle part of the cover body 11. When the knob engagement mechanism is in the first position, the cantilever 15 abuts against the first limiting guide 25. When the knob engagement mechanism is in the second position, the cantilever 15 abuts against the second limiting guide 26. The first limiting guide 25 can be fixedly connected to the protruded flange 31 of the tailgate trim panel 12. When the cantilever 15 is in the first position, the cantilever 15 is overlapped on the first limiting guide 25, so that the cover body 11 and the cantilever 15 are limited in a direction from inside to outside of the vehicle by the tailgate trim panel 12 and the first limiting guide 25, thereby locking the second side of the cover body 11 with the tailgate trim panel 12. At this time, the cover body 11 blocks the emergency opening 13, and the cover body 11 cannot be flipped and opened toward the inside of the vehicle. The first limiting guide 25 can be shaped like a ┘, a protruded side edge of the first limiting guide 25 can limit the rotation direction of the cantilever 15, and the second limiting guide 26 can be horizontally arranged in the middle part of the cover body 11 to limit the cantilever 15 after rotating 90 degrees. In this way, through the guidance and limiting of the first limiting guide 25 and the second limiting guide 26, the knob engagement mechanism rotates in a predetermined direction and stays at a predetermined position, so that misoperation can be prevented, and the cantilever 15 rotates into only two positions, so as to accurately open or close the emergency opening 13.

The guide blocks 21, the limiting rib 22 and the rotating sleeve 20 can be injection molded into one piece.

According to specific embodiments of the present disclosure, in a second aspect, the present disclosure provides a vehicle, which includes the tailgate emergency opening cover of the first aspect.

The technical scheme of the present disclosure has the following characteristics.
1. The tailgate emergency opening cover provided by the present disclosure can open the emergency opening by directly rotating the knob engagement mechanism with a hand, without the aid of an auxiliary tool, so the opening operation is fast and convenient. At the same time, the tailgate emergency opening cover will not cause the risk of poor matching or even separation between the cover body and the tailgate trim panel during the opening process, so the man-machine operation is more reasonable, the use stability is high and the service life is long, and the connection is still firm after repeated use.
2. The tailgate emergency opening cover provided by the present disclosure makes the cantilever rotate at the same time by rotating the knob, and the cantilever overlaps or avoids the tailgate trim panel, so that the emergency opening can be opened or closed quickly and conveniently.
3. The tailgate emergency opening cover provided by the disclosure enables the cantilever to rotate in a predetermined direction through the guiding and limiting actions of the limiting guides. The fitting of the protrusion with the limiting groove may be achieved through the deformation of the protrusion, and thus the knob can stop at the predetermined position after rotating 90 degrees. In this way, the cantilever can be kept at and only located in the first position and the second position, and the emergency opening cover can be locked or unlocked, so that the state of opening or closing the emergency opening is reliable.
4. The tailgate emergency opening cover provided by the present disclosure can be locked or unlocked by the cantilever because of the rotating operation, so that the emergency opening cover will not fail due to the wear of parts during the opening process, the use stability is high and the service life is long, and the connection is still firm after repeated use.

The above description is intended to be illustrative rather than limiting. For example, the above-mentioned examples (or one or more solutions thereof) can be performed alone or used in combination with each other, and it is considered that these embodiments can be combined with each other in various combinations or permutations. The scope of the present disclosure should be determined by a full scope with reference to the appended claims along with equivalents to which these claims are entitled.

## Claims

1. A tailgate emergency opening cover, comprising:
a cover body (11) configured to match an emergency opening (13) on a tailgate trim panel (12);
a connecting mechanism (10) arranged on the cover body (11) and configured to fix a first side of the cover body (11) with the tailgate trim panel (12); and
a knob engagement mechanism rotatably arranged on the cover body (11),
wherein when the knob engagement mechanism is in a first position, a second side of the cover body (11) is locked with the tailgate trim panel (12),
when the knob engagement mechanism is in a second position, the second side of the cover body (11) is unlocked from the tailgate trim panel (12), and the cover body (11) can move away from the emergency opening (13) to open the emergency opening (13).

2. The tailgate emergency opening cover according to claim 1, wherein the knob engagement mechanism comprises a knob (14) and a cantilever (15), the knob (14) is connected with the cantilever (15), and the knob (14) is rotated to drive the cantilever (15) to rotate synchronously;
when the knob engagement mechanism is in the first position, the cantilever (15) contacts the tailgate trim panel (12) to lock the cover body (11) with the tailgate trim panel (12); and
when the knob engagement mechanism is in the second position, the cantilever (15) is separated from the tailgate trim panel (12).

3. The tailgate emergency opening cover according to claim 2, wherein the cover body (11) has a mounting part (17), and the mounting part (17) defines a recessed part (16) on a side of the cover body (11), and correspondingly forms a boss on the other side of the cover body (11), the boss is provided with a mounting hole (18), and the boss and the cantilever (15) are located at a same side of the cover body (11); and
the recessed part (16) is communicated with the mounting hole (18), and a diameter of the recessed part (16) is larger than a diameter of the mounting hole (18).

4. The tailgate emergency opening cover according to claim 3, wherein the knob (14) comprises an operating part (19) and a rotating sleeve (20), an end of the rotating sleeve (20) is connected with the operating part (19), and the operating part (19) is rotatably arranged in the recessed part (16), and the rotating sleeve (20) passes through the mounting hole (18), and the cantilever (15) is connected with the rotating sleeve (20).

5. The tailgate emergency opening cover according to claim 4, wherein an outer circumferential surface of the rotating sleeve (20) is provided with guide blocks (21), and the guide blocks (21) are fixedly connected with the rotating sleeve (20) and arranged at intervals in a circumferential direction of the rotating sleeve (20);
the guide block (21) comprises a guide surface (211) and an abutment surface (212), the guide surface (211) is configured to guide insertion of the rotating sleeve (20) into the mounting hole (18), and the abutment surface (212) is in contact with an end surface of the boss facing away from the recessed part (16); and
the guide surface (211) is an inclined surface, the guide surface (211) is adjacent to the abutment surface (212), and a distance from an axis of the rotating sleeve (20) to the guide surface (211) gradually increases along the axis towards an end close to the abutment surface (212).

6. The tailgate emergency opening cover according to claim 5, wherein the outer circumferential surface of the rotating sleeve (20) is provided with a limiting rib (22), the limiting rib (22) is fixedly connected with the rotating sleeve (20), the limiting rib (22) is rotatably fitted with a hole wall of the mounting hole (18), and the limiting rib (22) and the guide blocks (21) are arranged alternately in the circumferential direction of the mounting hole (18).

7. The tailgate emergency opening cover according to claim 6, wherein a side of the limiting rib (22) far from the rotating sleeve (20) is provided with a protrusion (23), and an outer contour of a cross section of the protrusion (23) is a circular arc surface.

8. The tailgate emergency opening cover according to claim 7, wherein the hole wall of the mounting hole (18) is provided with at least two recessed limiting grooves (24), and the at least two limiting grooves (24) are arranged at intervals along a circumference of the mounting hole (18); and
when the knob (14) is rotated, the protrusion (23) rotates along the hole wall of the mounting hole (18), and when the knob engagement mechanism is located in the first position or the second position, the protrusion (23) is engaged in one of the limiting grooves (24).

9. The tailgate emergency opening cover according to claim 8, wherein the cover body (11) is provided with a first limiting guide (25) and a second limiting guide (26), the first limiting guide (25) is located on the tailgate trim panel (12) and the second limiting guide (26) is located in a middle part of the cover body (11);
when the knob engagement mechanism is in the first position, the cantilever (15) abuts against the first limiting guide (25); and
when the knob engagement mechanism is in the second position, the cantilever (15) abuts against the second limiting guide (26).

10. A vehicle, comprising a tailgate emergency opening cover according to any one of claims 1-9.
